# EUROPÄISCHE PATENTANMELDUNG

(11) **EP 2 039 543 A2**
(43) Veröffentlichungstag der Anmeldung: **25.03.2009**
(21) Anmeldenummer: 08015923.9
(22) Anmeldetag: 10.09.2008
(51) Int. Cl.: B60H 1/24

(54) **Rückschlagklappe für eine Entlüftungsvorrichtung**

(30) Priorität: 18.09.2007 DE 202007013042 U
(71) Anmelder: TRW Automotive Electronics & Components GmbH, 78315 Radolfzell (DE)
(72) Erfinder: Hofmann, Jürgen, 67304 Eisenberg (DE); Loewe, Hubert, 66919 Weselberg (DE); Mootz, Frank, 67716 Heltersberg (DE)
(74) Vertreter: Prinz & Partner

(57) **Zusammenfassung**

Rückschlagklappe für eine Entlüftungsvorrichtung, wobei die Rückschlagklappe (16) mit Rippen (20) versehen ist, die der Verstärkung der Rückschlagklappe (16) dienen und wobei sich die Wandstärke (S) der Rückschlagklappe (16) im Bereich der Rippen (20) nicht ändert.

## Beschreibung

Die Erfindung betrifft eine Rückschlagklappe für eine Entlüftungsvorrichtung sowie eine solche Entlüftungsvorrichtung.

Eine Entlüftungsvorrichtung ermöglicht es, die über ein Lüftungssystem dem Fahrzeuginnenraum zugeführte Luft abzuführen. Die Entlüftungsvorrichtung hat einen Rahmen, der wenigstens eine Rückschlagklappe aufnimmt. Wenn keine Luft aus dem Fahrzeuginnenraum ausströmt, liegt die Rückschlagklappe am Rahmen an, so dass ein Eindringen von Feuchtigkeit, Abgas oder Schmutz in den Fahrzeuginnenraum verhindert ist. Es ist bekannt, derartige Entlüftungsvorrichtungen aus zwei Komponenten herzustellen, wobei der Rahmen aus einer härteren Materialkomponente besteht, während die Rückschlagklappe aus einer weicheren Materialkomponente gebildet ist. Wenn im Fahrzeuginnenraum ein höherer Druck herrscht als in der Umgebung des Fahrzeugs, bewegt sich die Rückschlagklappe in eine Stellung, in der die Luft aus dem Fahrzeuginnenraum ausströmen kann. Ab einer bestimmten Luftmenge, die aus dem Fahrzeuginnenraum ausströmt, beginnt die Rückschlagklappe zu flattern, das heißt die Rückschlagklappe wird aufgrund der Luftströmung in Schwingung versetzt. Die in Schwingung versetzte Rückschlagklappe klappert, was störend ist.

Die Aufgabe der Erfindung besteht darin, eine Rückschlagklappe und eine Entlüftungsvorrichtung mit einer solchen Rückschlagklappe bereitzustellen, die mit geringem Aufwand herzustellen ist und sich durch eine gute Funktionalität (Klapperfreiheit usw.) auszeichnet.

Zu diesem Zweck sieht die Erfindung eine Rückschlagklappe für eine Entlüftungsvorrichtung vor, wobei die Rückschlagklappe mit Rippen versehen ist, die der Verstärkung der Rückschlagklappe dienen, und wobei sich die Wandstärke der Rückschlagklappe im Bereich der Rippen nicht ändert. Die Erfindung beruht auf dem Grundgedanken, die Rückschlagklappe so zu verstärken, dass ein Flattern derselben verhindert ist. Durch die Rippen wird die Rückschlagklappe verstärkt. Selbst bei einer großen ausströmenden Luftmenge, also einer großen Kraft, die auf die Rückschlagklappe einwirkt, flattert die Rückschlagklappe nicht, da die Rückschlagklappe durch die Rippen versteift ist. Es handelt sich bei den Rippen nicht um auf die Rückschlagklappe aufgesetzte Elemente. Vielmehr ist die Wandstärke der Rückschlagklappe im Bereich der Rippen gleichbleibend und die "Rippen" entstehen durch die Änderung des Profils der Rückschlagklappe.

Vorzugsweise sind die Rippen in Längsrichtung der Rückschlagklappe vorgesehen. Die Rippen versteifen die Rückschlagklappe in Längsrichtung und verhindern, dass die Rückschlagklappe flattert.

Genauso gut könnten die Rippen senkrecht zur Längsrichtung oder unter einem beliebigen Winkel zur Längsrichtung angeordnet sein.

Die Rippen sind bevorzugt parallel zueinander, weshalb sie die Rückschlagklappe in einer Richtung versteifen.

Gemäß einer Ausführungsform sind die Rippen im Querschnitt gesehen wellenförmig. Es ist also ein Wellenprofil gebildet, das sich durch seine Stabilität auszeichnet.

Gemäß einer weiteren Ausführungsform sind die Rippen im Querschnitt gesehen trapezförmig, weshalb ein Trapezprofil gebildet ist.

Gemäß einer weiteren Ausführungsform sind die Rippen im Querschnitt gesehen rechteckig.

Auch können die Rippen im Querschnitt gesehen sägezahnartig ausgebildet sein, weshalb ein Sägezahnprofil gebildet ist.

Die Rückschlagklappe kann gespritzt, geprägt oder gestanzt sein. Die Rückschlagklappe ist aus einem Kunststoff jeglicher Art oder aus Gummi jeglicher Art.

Ferner betrifft die Erfindung eine Entlüftungsvorrichtung, insbesondere zur Entlüftung eines Fahrzeuginnenraums mit einer Rückschlagklappe der oben genannten Art. Hinsichtlich der Vorteile wird auf die obigen Erläuterungen verwiesen.

Vorzugsweise ist ein Rahmen vorgesehen, an dem die Rückschlagklappe angebracht ist. Die Rückschlagklappe ist also ein separates Teil, das getrennt vom Rahmen hergestellt ist und anschließend an diesem angebracht ist. Die Rückschlagklappe kann zum Beispiel am Rahmen angeklipst werden.

Alternativ ist ein Rahmen vorgesehen, und die Rückschlagklappe ist Teil des Rahmens. Die Rückschlagklappe ist beispielsweise am Rahmen angespritzt. Die Entlüftungsvorrichtung ist also einstückig, wodurch ein Zusammenbau mehrerer einzelner Teile entfällt. Die Entlüftungsvorrichtung ist deshalb kostengünstig.

Weitere Merkmale und Vorteile ergeben sich aus den Unteransprüchen.

Die Erfindung wird nachfolgend anhand von Ausführungsformen beschrieben, die in den Zeichnungen dargestellt sind. In den Zeichnungen zeigen:
- Figur 1 eine Schnittansicht einer erfindungsgemäßen Entlüftungsvorrichtung mit einer erfindungsgemäßen Rückschlagklappe,
- Figuren 2a bis 2f perspektivische Ansichten der Rückschlagklappe von Figur 1, wobei die Rückschlagklappe jeweils als separates Bauteil ausgebildet ist und mit Rippen versehen ist, wobei die Figuren 2a bis 2f verschiedene Varianten der Rückschlagklappe zeigen,
- Figuren 3a bis 3g Querschnitte von Rückschlagklappen, wobei die Figuren 3a bis 3f die in den Figuren 2a bis 2f gezeigten Varianten der Rückschlagklappe zeigen und die Figur 3g eine weitere Variante der Rückschlagklappe im Querschnitt gesehen zeigt, und
- Figuren 4a bis 4g perspektivische Ansichten der Rückschlagklappe von Figur 1, wobei die Rückschlagklappe jeweils einstückig mit einem Rahmen ausgebildet ist und die Figuren 4a bis 4g verschiedene Varianten der Rückschlagklappe zeigen.

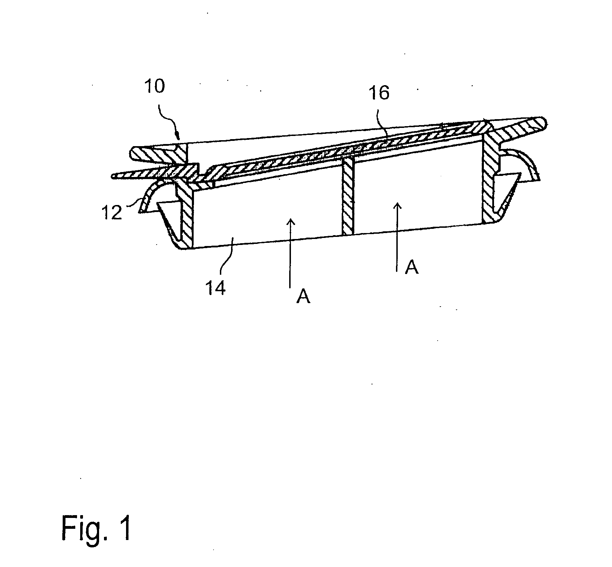

In Figur 1 ist eine Entlüftungsvorrichtung 10 gezeigt, die in eine Öffnung (nicht gezeigt) in einem Trägerteil eines Fahrzeugs eingesetzt werden kann und einen Rahmen 12 aufweist. Der Rahmen 12 hat wenigstens eine Ausströmöffnung 14, die von einer jeweiligen Rückschlagklappe 16 verschlossen oder geöffnet werden kann. In Figur 1 ist die Rückschlagklappe 16 in ihrer geschlossenen Stellung gezeigt. Die Rückschlagklappe 16 ist aus einem Material, das es erlaubt, dass die Rückschlagklappe 16 ab einem bestimmten, im Fahrzeuginnenraum vorherrschenden Druck durch den Luftstrom A geöffnet wird. Die Rückschlagklappe 16 kann aus einem weichen Kunststoffmaterial gebildet sein und kann durch Spritzen, Prägen, Stanzen oder Verformen hergestellt sein.

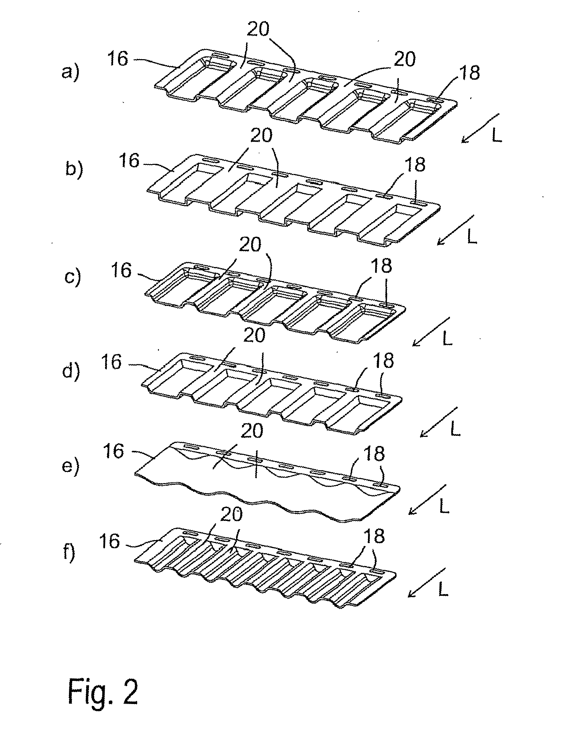

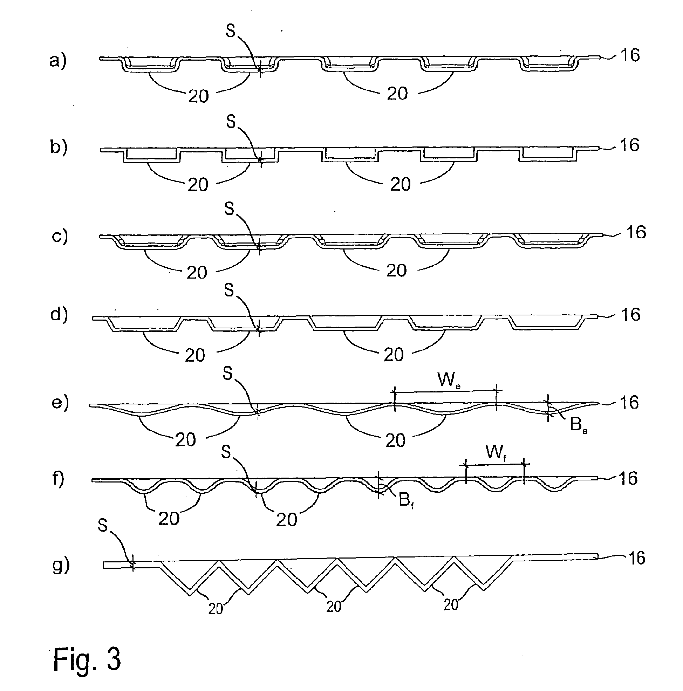

In den Figuren 2 und 3 ist die Rückschlagklappe 16 in verschiedenen Varianten gezeigt. Die Rückschlagklappe 16 ist jeweils ein separates Bauteil und kann am Rahmen 12 angebracht werden. Beispielsweise kann die Rückschlagklappe 16 am Rahmen 12 angeklipst werden. In den Figuren 2a bis 2f sind jeweils mehrere Aussparungen 18 gezeigt, die dazu dienen, eine Verbindung mit dem Rahmen 12 herzustellen. Der Rahmen 12 müßte entsprechende Vorsprünge (nicht gezeigt) haben, die durch die Aussparungen 18 der Rückschlagklappe 16 gelangen können und so eine Verbindung mit derselben eingehen können. Gezeigt sind jeweils sieben Aussparungen 18, die auf einer Geraden angeordnet sind, wobei die Gerade senkrecht zur Längsrichtung L der jeweiligen Rückschlagklappe 16 ist.

Jede Rückschlagklappe 16 weist jeweils mehrere parallel zueinander angeordnete, in Längsrichtung L der Rückschlagklappe 16 verlaufende Rippen 20 auf, die die Rückschlagklappe 16 verstärken und verhindern, dass die Rückschlagklappe 16 bei einem ausströmenden Luftstrom A flattert. Die Rippen 20 sind nicht auf die Rückschlagklappe 16 aufgesetzt, sondern durch eine Änderung des Profils der Rückschlagklappe 16 gebildet. D.h. die Wandstärke der Rückschlagklappe 16 ändert sich im Bereich der Rippen 20 nicht. Die Wandstärke ist mit S bezeichnet und in den Figuren 3a bis 3g gezeigt. Die Rippen 20 können unterschiedlich ausgebildet sein, worauf im folgenden eingegangen wird.

In den Figuren 2a und 2b sind die Rippen 20 im Querschnitt gesehen im wesentlichen rechteckig ausgebildet, wobei die Rippen in Figur 2a jeweils abgerundet sind (siehe auch Figuren 3a, 3b). Auch der Übergang der Vertiefungen zwischen den Rippen 20 zu dem Bereich, in dem die Aussparungen 18 vorgesehen sind, ist in Figur 2a abgerundet.

Die in den Figuren 2c und 2d gezeigten Rippen 20 sind im Querschnitt gesehen trapezförmig, also als Trapezprofil ausgebildet, wobei die in Figur 2c gezeigten Rippen 20 im Unterschied zu denen in Figur 2d gezeigten Rippen 20 abgerundet sind (siehe auch Figuren 3c, 3d). Auch der Übergang der Vertiefungen zwischen den Rippen 20 zu dem Bereich, in dem die Aussparungen 18 vorgesehen sind, ist in Figur 2c abgerundet.

Die in den Figuren 2e und 2f gezeigten Rippen 20 sind im Querschnitt gesehen wellenförmig, also als Wellenprofil ausgebildet, wobei die Amplituden B_{f}, der in Figur 3f gezeigten Rippen 20, unwesentlich größer als die Amplituden Bₑ der in Figur 3e gezeigten Rippen 20 sind (siehe auch Figuren 3e, 3f). Die Wellenlänge Wₑ der in Figur 2e gezeigten, im Querschnitt gesehen wellenförmigen Rippen 20 ist um ein Vielfaches größer als die Wellenlänge W_{f} der in Figur 2f gezeigten, im Querschnitt gesehen wellenförmigen Rippen 20.

In Figur 3g sind die Rippen 20 im Querschnitt gesehen sägezahnartig ausgebildet gezeigt.

Obwohl die Rippen 20 in allen Figuren in Längsrichtung L angeordnet sind, wäre es möglich, diese quer oder schräg zur Längsrichtung L anzuordnen.

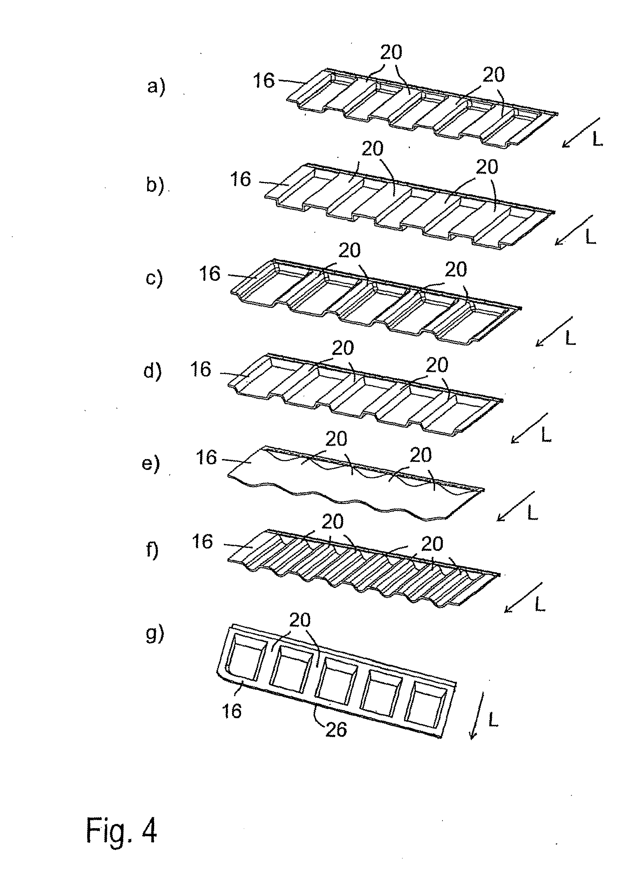

Die in den Figuren 4a bis 4f gezeigten Rückschlagklappen 16 unterscheiden sich von denen in den Figuren 2a bis 2f gezeigten Rückschlagklappen 16 nur darin, dass die Rückschlagklappen 16 der Figuren 4a bis 4f einteilig mit dem Rahmen 12 ausgebildet sind. Insbesondere sind die Rückschlagklappen 16 und der Rahmen 12 im Zweikomponenten-Spritzgußverfahren ausgebildet, wobei die jeweilige Rückschlagklappe 16 an den Rahmen 12 angespritzt ist.

Die Form der Rippen 20 der Figuren 4a bis 4f, die der Verstärkung der Rückschlagklappe 16 dienen, entspricht der Form der Rippen 20 der Figuren 2a bis 2f, womit hierauf verwiesen wird.

In Figur 4g ist eine weitere Variante einer Rückschlagklappe 16 mit Rippen 20 gezeigt. Diese unterscheidet sich von den bereits beschriebenen darin, daß die Rippen 20 in Längsrichtung L gesehen in einem Abstand von einem Rand 26 enden. Die Rippen 20 der bereits beschriebenen Rückschlagklappen 16 hingegen erstrecken sich bis zu dem in Längsrichtung L gesehenen Rand 26. Allen Ausführungsformen ist gemeinsam, dass die Rückschlagklappe 16 als separates Bauteil ausgebildet ist, das an dem Rahmen 12 angebracht wird. Die Rippen 20, die in verschiedenen Ausführungsformen gezeigt sind, verstärken jeweils die Rückschlagklappe 16 und verhindern so ein Flattern derselben und somit störende Klappergeräusche.

## Patentansprüche

1. Rückschlagklappe für eine Entlüftungsvorrichtung (10), wobei die Rückschlagklappe (16) mit Rippen (20) versehen ist, die der Verstärkung der Rückschlagklappe (16) dienen, und wobei sich die Wandstärke (S) der Rückschlagklappe (16) im Bereich der Rippen (20) nicht ändert.

2. Rückschlagklappe nach Anspruch 1, **dadurch gekennzeichnet, daß** die Rippen (20) in Längsrichtung (L) der Rückschlagklappe (16) vorgesehen sind.

3. Rückschlagklappe nach Anspruch 1 oder 2**, dadurch gekennzeichnet, daß** die Rippen (20) parallel zueinander sind.

4. Rückschlagklappe nach einem der vorhergehenden Ansprüche, **dadurch gekennzeichnet, daß** die Rippen (20) im Querschnitt gesehen wellenförmig sind.

5. Rückschlagklappe nach einem der Ansprüche 1 bis 3, **dadurch gekennzeichnet, daß** die Rippen (20) im Querschnitt gesehen trapezförmig sind.

6. Rückschlagklappe nach einem der Ansprüche 1 bis 3, **dadurch gekennzeichnet, daß** die Rippen (20) im Querschnitt gesehen rechteckig sind.

7. Rückschlagklappe nach einem der Ansprüche 1 bis 3, **dadurch gekennzeichnet, daß** die Rippen (20) im Querschnitt gesehen sägezahnartig sind.

8. Rückschlagklappe nach einem der vorhergehenden Ansprüche, **dadurch gekennzeichnet, daß** die Rückschlagklappe (16) geprägt, gestanzt oder gespritzt ist.

9. Entlüftungsvorrichtung, insbesondere zur Entlüftung eines Fahrzeuginnenraumes, mit einer Rückschlagklappe (16) nach einem der vorhergehenden Ansprüchen.

10. Entlüftungsvorrichtung nach Anspruch 9, **dadurch gekennzeichnet, daß** ein Rahmen (12) vorgesehen ist, an dem die Rückschlagklappe (16) angebracht ist.

11. Entlüftungsvorrichtung nach Anspruch 9**, dadurch gekennzeichnet, daß** ein Rahmen (12) vorgesehen ist und die Rückschlagklappe (16) Teil des Rahmens (12) ist.
